# EUROPEAN PATENT SPECIFICATION

(11) **EP 2 913 233 B1**
(45) Date of publication and mention of the grant of the patent: **29.06.2016**
(21) Application number: 14382073.6
(22) Date of filing: 28.02.2014
(51) Int. Cl.: B60T 7/10, B60T 11/04, G05G 23/02

(54) **Automatic cable tensioning device suitable for parking brakes and parking brake with the automatic tensioning device**
Vorrichtung zum automatischen Einstellen der Spannung eines Seilzugs einer Feststellbremse und Feststellbremse mit dieser automatischen Einstellvorrichtung
Dispositif de correction automatique de la tension de cable pour frein de stationnement et frein de stationnement avec ce dispositif

(43) Date of publication of application: 02.09.2015
(73) Proprietor: Batz, S.Coop., 48140 Igorre (ES)
(72) Inventor: Abrisqueta Echebarria, Xabier, 48490 Ugao-Miraballes (ES); Corral Rodriguez, Pedro, 38700 Castro Urdiales (ES)
(74) Representative: Igartua, Ismael

(56) References cited:
- DE-B3-102004 016 623
- US-A1- 2007 295 149
- US-A1- 2009 314 122

## Description

### TECHNICAL FIELD

The present invention relates to an automatic cable tensioning device particularly suitable for parking brakes. On the other hand, the present invention also relates to a parking brake comprising the automatic tensioning device.

### PRIOR ART

The present invention relates to cable tensioning devices suitable for parking brakes, the objective of which is to maintain tension in brake cables which are attached to the brakes of the corresponding motor vehicle. When the vehicle driver actuates the parking brake, the brake cables are tensioned, and the vehicle brakes are thus actuated. On the other hand, when the driver releases the parking brake and takes the brake to a rest position, the brake cables become loose and the vehicle brakes are thus released. Since said operations of actuating and releasing the parking brake are often repeated, brake cables can repeatedly be exposed to alternating tensile forces, being able to generate brake cable fatigue over time, which causes them to stretch out, and thus becoming loose with tension loss. When brake cables lose part of their nominal tension, if the parking brake is actuated, the winding of cable that occurs is not enough for tensioning the cables to their nominal tension, a loss of vehicle braking efficiency taking place and the parking brake not even being able to carry out its function.

Known tensioning devices comprise automatic tension regulating means, such that in the event that the brake cables lose tension, in a rest position of the parking brake, the automatic tensioning device acts on the brake cables, taking up the added length due to the stretching thereof, and thereby maintaining the tension of brake cables in their connection with the vehicle brakes.

US2009/0314122 discloses an automatic cable tensioning device suitable for parking brakes comprising a support unit suitable for being coupled to a brake lever of a parking brake, a regulating element suitable for being coupled to the cable, main elastic means suitable for regulating cable tension acting on the regulating element, and a locking assembly which is coupled in the support unit, the locking assembly comprising a ratchet coupled to the regulating element in the movement of the brake lever between a rest position in which the parking brake is deactivated and allows relative movement of the regulating element with respect to the ratchet for tensioning the cable, and an active position in which the parking brake is activated, the ratchet of the locking assembly preventing relative movement of the regulating element for loosening the cable.

US 2007/0295149 A1 discloses a self-adjusting parking brake actuator that includes a brake lever that is movable between brake-released and brake-applied positions.

### DISCLOSURE OF THE INVENTION

The object of the invention is to provide an automatic cable tensioning device suitable for parking brakes and a parking brake with the automatic tensioning device, as defined in the claims.

The automatic tensioning device of the invention comprises a support unit suitable for being coupled to a brake lever of a parking brake, a regulating element suitable for being coupled to the cable, main elastic means suitable for regulating cable tension acting on the regulating element, and a locking assembly which is coupled in the support unit, the locking assembly comprising a ratchet coupled to the regulating element in the movement of the brake lever between a rest position in which the parking brake is deactivated and allows relative movement of the regulating element with respect to the ratchet for tensioning the cable, and an active position in which the parking brake is activated, the ratchet of the locking assembly preventing relative movement of the regulating element for loosening the cable.

The locking assembly of the device of the invention comprises a pushing unit locking the ratchet, the locking of the ratchet causing the locking of the relative movement of the regulating element when the brake lever is in the rest position and the cable is not subjected to tension.

The automatic tensioning device of the invention regulates the nominal cable tension which has been lost, when brake cable fatigue has occurred over time, which causes them to stretch out. In the rest position, the locking assembly allows relative movement of the regulating element with respect to the ratchet, and the main elastic means regulates cable tension. However, the ratchet of the locking assembly is furthermore continuously coupled to the regulating element to which the cable is coupled, such that in the entire range of movement of the brake lever between the rest position and the active position, and vice versa, from the first moment the cable is tensioned, the vehicle brakes being actuated. Therefore, the problem referred to as dead travel, which consists of there being a section of the range of movement of the brake lever in which the ratchet is not coupled to the regulating element, and the user notices that there is no resistance of the brake lever against the movement until the ratchet is coupled to the regulating element and the cable is tensioned, is solved. This means a loss of efficiency in the parking brake.

The device of the invention also solves the problem occurring in vehicles when they are parked with the parking brake activated, there are low temperatures and freezing occurs. In those cases, the cable is subjected to tension and when freezing occurs, the vehicle brake pads stick to the brake drum. When the brake lever is released, the cable loses tension, and when said lever passes to the rest position, the cable does not pass to its initial position due to the lack of tension, and the cable becomes loose. In other devices of the state of the art, in said situation with the lever in the rest position the ratchet of the locking assembly allows relative movement between the regulating element and the ratchet, resulting in the main elastic means pulling on the cable, taking it up. The problem that occurs is that a length of cable with respect to the vehicle brakes has been taken up that is smaller than the initially defined length, and when it is no longer freezing and the pads return to their original position, the cable is excessively tensioned with problems in the operation of the parking brake.

The automatic tensioning device of the invention solves the freezing problem because the pushing unit of the locking assembly locks the relative movement between the regulating element and the ratchet. When it is no longer freezing, tension comes back to the cable and it recovers its initial position. The automatic tensioning device of the invention thus solves both problems, i.e., the dead travel problem and the freezing problem.

These and other advantages and features of the invention will become evident in view of the drawings and the detailed description of the invention.

### DESCRIPTION OF THE DRAWINGS

Figure 1 shows a front perspective view of an embodiment of a parking brake with an automatic cable tensioning device according to the invention.
Figure 2 shows a rear perspective view of the parking brake shown in Figure 1.
Figure 3 shows a view of the parts making up the parking brake shown in Figure 1.
Figure 4 shows a partial sectional view of the automatic tensioning device of the parking brake shown in Figure 1.
Figure 5 shows a perspective view of the support unit of the automatic tensioning device of the parking brake of Figure 1.
Figure 6 shows a perspective view of the ratchet support of the automatic tensioning device of the parking brake of Figure 1.
Figure 7 shows a perspective view of the regulating element mounted in the ratchet support of the automatic tensioning device of the parking brake of Figure 1.
Figure 8 shows a side sectional view of the parking brake shown in Figure 1, with the brake lever in the active position.
Figure 9 shows a side sectional view of the parking brake shown in Figure 1, with the brake lever in the rest position and in a situation in which the regulating element is subjected to tension.
Figure 10 shows a sectional view of the parking brake shown in Figure 1, with the brake lever in the rest position and in a situation in which the regulating element is not subjected to tension.

### DETAILED DISCLOSURE OF THE INVENTION

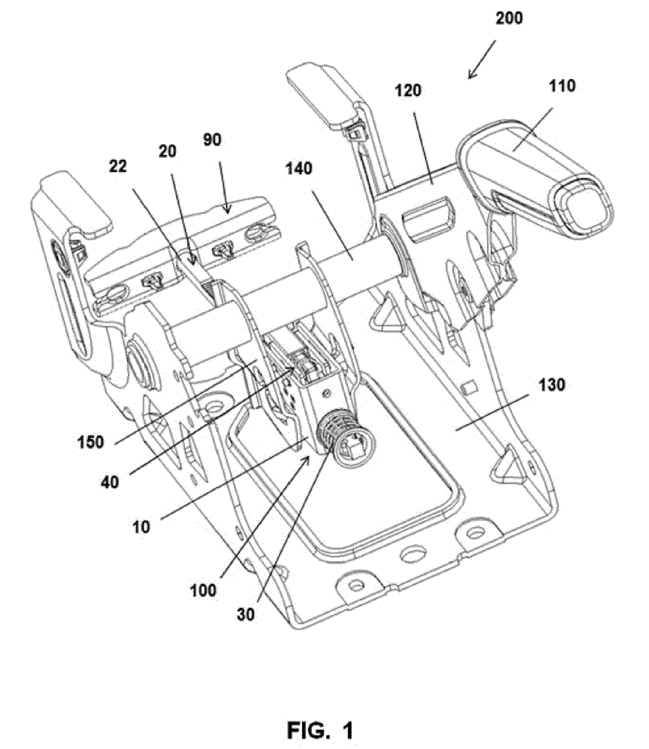

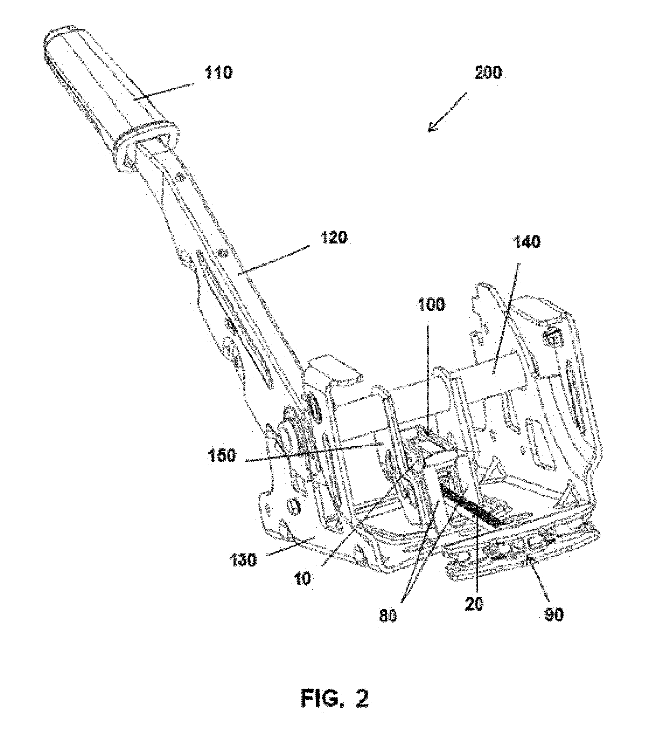

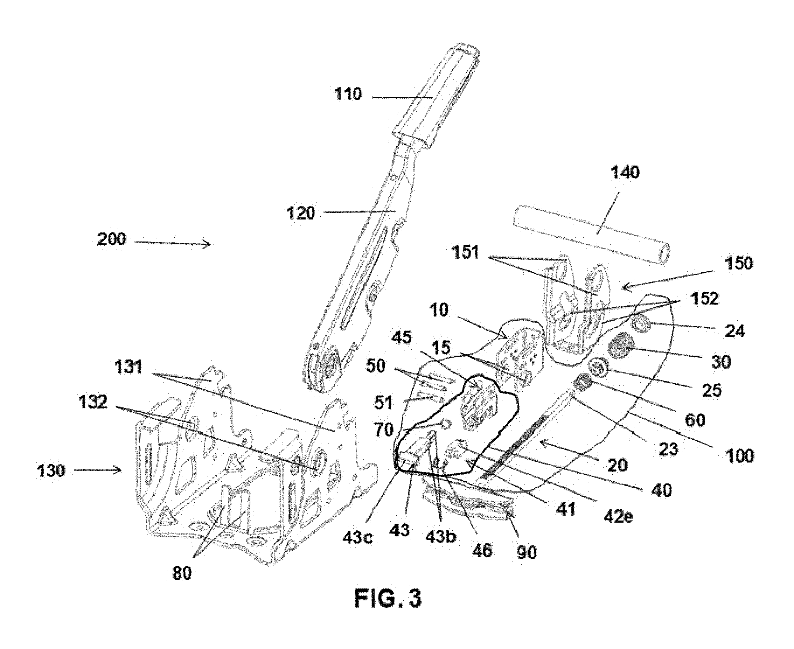

Figures 1 to 3 show an embodiment of a parking brake 200 suitable for motor vehicles, comprising an automatic cable tensioning device 100 according to the invention.

The automatic cable tensioning device 100 (not shown in the drawings) suitable for parking brakes comprises a support unit 10 suitable for being coupled to a brake lever 110 of a parking brake 200. Said parking brake 200 comprises a body 120 at the end of which is arranged the brake lever 110, the actuation of the brake lever 110 by the user allowing the activation of the parking brake 200. Said parking brake 200 also comprises a support 130 with side walls 131, said side walls 131 each comprising a hole 132. Said support 130 allows the attachment of the parking brake 200 to the vehicle (not shown in the drawings), the parking brake 200 also comprising a shaft 140 integrally attached at one end (for example by means of welding) to the body 120 in a hole 132 of the support 130, and at the other end it is connected in a freely rotational manner to the other hole 132. Therefore, when the brake lever 110 is actuated, the body 120 rotates around the shaft 140, said shaft 140 rotating at the same time in the hole 132 of the side wall 131 of the support 130.

The parking brake 200 also comprises a lever cam 150, which is U-shaped in this embodiment of the parking brake 200. The lever cam 150 comprises two side walls 151 with a hole in each side wall 151 allowing the introduction of the shaft 140 and the fixing thereof with the lever cam 150 in an integral manner (for example by means of welding). The lever cam 150 also comprises two elongated holes 152, one in each side wall 151, for comfortably mounting the support unit 10 of the device 100 inside the lever cam 150 in a pivoting manner. The device 100 is thus coupled to the parking brake 200. Therefore, when the brake lever 110 is actuated, the body 120 of the parking brake 200 rotates around the shaft 140, said shaft 140 rotating at the same time, and since the lever cam 150 is integral with the shaft 140, it also rotates.

As the support unit 10 of the device 100 is coupled with the lever cam 150 in a pivoting manner, the rotation of said lever cam 150 will cause the pivoting of the support unit 10 in the holes 152 of the lever cam 150, maintaining horizontality, causing linear movement of the support unit 10 due to the rotation of the lever cam 150.

The device 100 also comprises a regulating element 20 suitable for being coupled to the cable, main elastic means 30 suitable for regulating cable tension Tc acting on the regulating element 20, and a locking assembly 40 which is coupled in the support unit 10. The locking assembly 40 comprises a ratchet 41 which is coupled to the regulating element 20, remaining constantly coupled in the range of movement of the brake lever 110 between a rest position and an active position. In the rest position, the brake lever 110 is lowered, without being actuated, and the parking brake 200 is deactivated, such that the cable is subjected to a low tension Tc characteristic of the positioning of the cable between the parking brake 200 and the vehicle brake pads (not shown in the drawings). In said rest position, the ratchet 41 of the locking assembly 40 only allows relative movement of the regulating element 20 with respect to the device 100 in a cable tensioning direction, such that if, for example due to repeated uses of the parking brake 200, the cable has lost some of its initial tension Tc, the main elastic means 30 pulls on the cable, tensioning it.

In the active position, the brake lever 110 is raised, actuated, and the parking brake 200 is activated, such that the cable is subjected to a high tension Tc because the brake pads have been pressed up against the brake drum (not shown in the drawings), and the cable has been tensioned. In said active position, the ratchet 41 of the locking assembly 40 prevents movement of the regulating element 20 in any direction, and the cable remains tensioned.

Parking brake 200 efficiency is thus optimal because the dead travel problem does not occur. This is because the ratchet 41 of the locking assembly 40 remains constantly coupled to the regulating element 20 in the entire range of movement of the brake lever 110 between the rest position and the active position, and vice versa.

The device 100 of the invention further allows locking relative movement of the regulating element 20 in any direction when the cable is not subjected to any tension Tc, this feature being particularly important when the brake lever 110 is in the rest position. To perform said locking, the locking assembly 40 comprises a pushing unit 43 locking the ratchet 41. By locking the ratchet 41, relative movement of the regulating element 20 in any position of the brake lever 110 is locked. This function of the device 100 allows solving the problem of the excessive cable tensioning when the brake lever 110 is in the rest position, when the vehicle brake pads freeze. As the regulating element 20, which is coupled to the cable, is locked in any direction, the main elastic means 30 cannot pull on said cable, and therefore excessive automatic cable tensioning cannot occur.

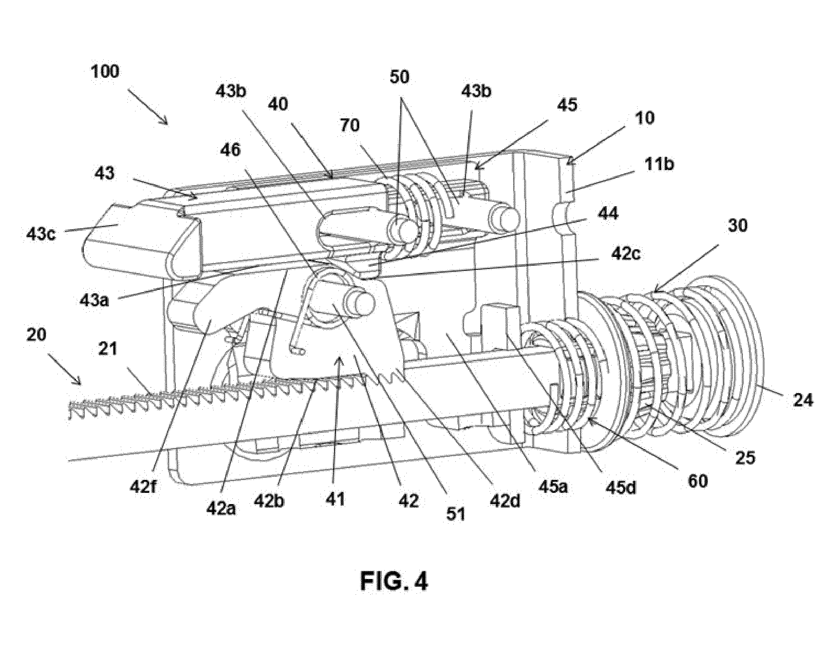

Figure 4 shows a partial cross-section view of the automatic tensioning device 100 of the parking brake 200 shown in Figures 1-3. The ratchet 41 of the locking assembly 40 comprises a body 42. The body 42 in this embodiment is a solid metal body having an approximate parallelepiped shape, with a surface 42a basically split into two planar and horizontal levels. In one of the horizontal levels, the surface 42a comprises an area 42c. The body 42 also comprises a virtually planar and horizontal surface 42b, opposite surface 42a, and facing the regulating element 20 to which it is coupled. The body 42 of the ratchet 41 comprises a notched area 42d at one end of the surface 42b. The regulating element 20, which is a metal rod having a square cross-section in this embodiment, in turn comprises a notched area 21 in a portion of the outer surface facing the notched area 42d of the ratchet 41.
For the ratchet 41 to be continuously coupled to the regulating element 20, the locking assembly 40 comprises elastic means 46 coupled to the ratchet 41. The elastic means 46 is a torsion spring, and it forces the notched area 42d of the ratchet 41 to be continuously meshed with the notched area 21 of the regulating element 20 when the brake lever 110 is actuated and moves between the rest position and the active position, and vice versa. The notches of the notched area 42d of the ratchet 41 and the notches of the notched area 21 of the regulating element 20 have a shape such that they allow their meshing and pulling on the regulating element 20, and therefore pulling on the cable, when the brake lever 110 is actuated. However, they also allow relative movement of the regulating element 20 with respect to the ratchet 41 when said regulating element 20 is pulled on by the main elastic means 30 when the brake lever 110 is at rest position and the ratchet 41 is not locked.

In this embodiment, the pushing unit 43 of the locking assembly 40 is arranged above the ratchet 41. This pushing unit 43 comprises two elongated bodies having an approximate parallelepiped shape which are attached along longitudinal axis thereof, one of the bodies being narrower than the other. The wider body of the pushing unit 43 is located above the ratchet 41 and comprises a surface 43a facing surface 42a of the ratchet 41. A protrusion 44, an end of which in certain situations of the parking brake 200 that will be explained below is supported in area 42c of the ratchet 41, projects from this surface 43a. When the protrusion 44 is supported in area 42c, the pushing unit 43 locks the movement of the ratchet 41, said ratchet 41 being locked with the regulating element 20, preventing movement of the regulating element 20 in any direction, and thereby preventing movement of the cable.

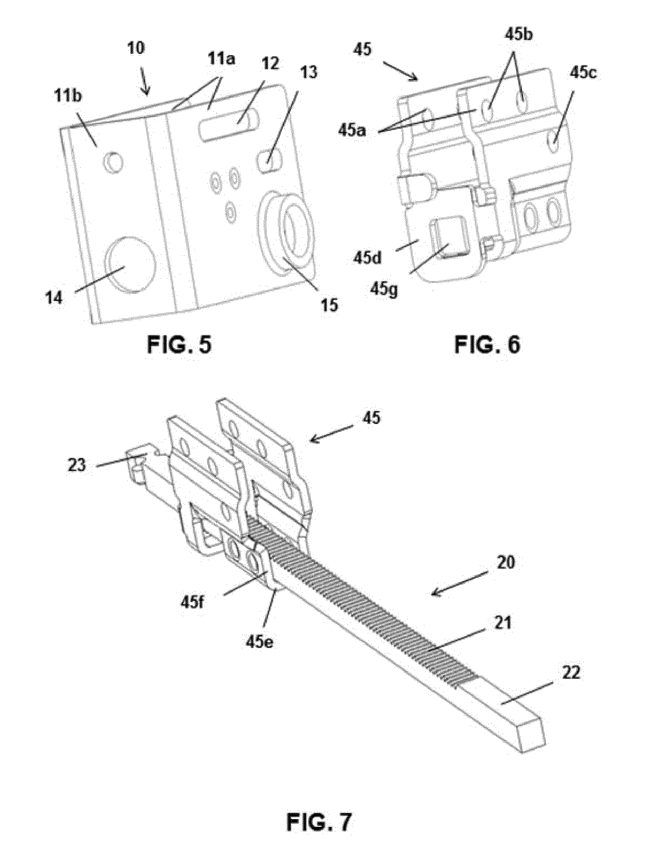

The device 100 is coupled to the parking brake 200 by means of the support unit 10. The locking assembly 40 of the device 100 is in turn coupled in the support unit 10 by means of a ratchet support 45. Figure 6 shows a perspective view of the ratchet support 45 of the device 100 of the parking brake 200 shown in Figures 1-3, and Figure 7 shows a perspective view of the regulating element 20 mounted in the ratchet support 45 of the device 100 of the parking brake 200 shown in Figures 1-3. Said ratchet support 45 is U-shaped with two side walls 45a. Each of the side walls 45a comprises two holes 45b each arranged at the same height and one hole 45c at a different height, and being positioned thereunder and to the side with respect to the two holes 45b, holes 45b and hole 45c traversing each wall 45a. The body 42 of the ratchet 41 comprises a hole 42e traversing it transversely, and the pushing unit 43 comprises two elongated holes 43b traversing it transversely, one of the holes 43b traverses the wider body, and the other hole 43b traverses the narrower body of the pushing unit 43.

The ratchet support 45 comprises a base 45e in turn comprising a U-shaped guided area 45f running along it longitudinally. The ratchet support 45 also comprises an orifice 45g traversing a wall 45d which is arranged between the side walls 45a. Said wall 45d is directed towards the main elastic means 30.

Figure 5 shows a perspective view of the support unit 10 of the device 100 of the parking brake 200 shown in Figures 1-3. The support unit 10 of the device 100 has a U shape lying on its side with two side walls 11 a and a base 11 b directed towards the main elastic means 30. The side walls 11 a each comprise an elongated hole 12 and an elongated hole 13 that are at different heights and laterally shifted. The support unit 10 also comprises an orifice 14 in the base 11 b traversing it. The support unit 10 comprises a protrusion 15 in each of the side walls 11 a on the outer side, said protrusions 15 allowing being coupled in a pivoting manner in the elongated holes 152 of the lever cam 150 of the parking brake 200. The regulating element 20 is thus mounted in the locking unit 40 being supported in a sliding manner in the guided area 45f of the ratchet support 45. In said position, the regulating element 20 traverses the orifice 45g of the ratchet support 45 and the orifice 14 of the support unit 10, maintaining one and the same direction with respect to the cable when the brake lever 110 is moved from the rest position to the active position.
The device 100 comprises two shafts 50 which traverse the elongated holes 12 of the support unit 10 when the locking assembly 40 is mounted in the support unit 10. The shafts 50 also traverse, respectively, the two holes 45b of the ratchet support 45, and they traverse, respectively, the two elongated holes 43b of the pushing unit 43. This coupling between the ratchet support 45 and the support unit 10 allows said ratchet support 45 to hang from the support unit 10, but it also allows sliding with respect to said support unit 10. The coupling between the pushing unit 43 and the ratchet support 45 allows said pushing unit 43 to hang from the ratchet support 45, and therefore from the support unit 10, but it also allows sliding of the pushing unit 43 with respect to the ratchet support 45.
The device 100 also comprises a shaft 51 which traverses the elongated hole 13 of the support unit 10, traverses the hole 45c of the ratchet support 45, and traverses the hole 42e of the body 42 of the ratchet 41 when the locking assembly 40 is mounted in the support unit 10. The ratchet 42 thus hangs from the shaft 51, being able to pivot with respect to said shaft 51, and the pushing unit 43 and the ratchet support 45 hang from the shafts 50, the locking assembly 40 thus being coupled to the support unit 10. The elongated holes 12 and 13 of the support unit 10 allow the locking assembly 40 to be able to be moved linearly with respect to the support unit 10 when the regulating element 20 is pulled on by the main elastic means 30, and the elongated holes 43b of the pushing unit 43 in turn allow said pushing unit 43 to be able to be moved linearly with respect to the ratchet support 45 when the pushing unit 43 is pushed, as will be explained below.

The locking assembly 40 comprises elastic means 70 coupled to the pushing unit 43, said elastic means 70 being arranged between the shaft 50 closest to the wall 11 b of the support unit 10 and the wall separating the narrow body and the wide body of the pushing unit 43. Said elastic means 70 allows the movement of the pushing unit 43 from a pushed position to a release position, the elastic means 70 being a compression spring. In the pushed position, the pushing unit 43 is moved with respect to the ratchet support 45, one end of the holes 43b is supported against the shafts 50, and the protrusion 44 is not supported in the area 42c of the ratchet 41, so the pushing unit 43 does not lock the ratchet 41. In the release position, the pushing unit 43 is not pushed and is not moved with respect to the ratchet support 45, the other end of the holes 43b being supported against the shafts 50, the protrusion 44 being supported in the area 42c of the ratchet 41, the pushing unit 43 locking the ratchet 41. In the pushed position, the pushing unit 43 is pushed by a stop 80, which is a double projection that projects vertically from the base of the support 130 of the parking brake 200. When the brake lever 110 is passed to the rest position, one end 43c of the pushing unit 43 interferes with the stop 80, and the pushing unit 43 passes to the pushed position. The pushing unit 43 can also be pushed manually in order to pass to the pushed position.

The device 100 comprises secondary elastic means 60 arranged between the base 11 b of the support unit 10 and the wall 45d of the ratchet support 45. Said secondary elastic means 60 is a compression spring allowing relative movement of the ratchet support 45 with respect to the support unit 10, the locking assembly 40 passing from an end position to an initial position. When the ratchet support 45 moves, the locking assembly 40 starting from the initial position, pulled on by the main elastic means 30 such as will be explained below, the shafts 50 are supported at one end of the elongated holes 43b driving the pushing unit 43. The shaft 51 drives the ratchet 41 which in turn drives the ratchet support 45, and the latter moves the locking assembly 40 along the elongated holes 12 and 13 of the support unit 10, said locking assembly 40 passing to the end position. The secondary elastic means 60 is compressed between the wall 11 b of the support unit 10 and the wall 45d of the ratchet support 45, allowing the movement of the locking assembly 40 from the end position to the initial position.

The regulating element 20 comprises one end 22 which is attached to an equalizer 90 of the parking brake 200, said equalizer 90 allowing coupling with the cable. The regulating element 20 comprises another end 23, opposite to end 22, to which there is attached a stop 24, which can be a washer or a bearing, the main elastic means 30 being arranged between the stop 24 and a guide stop 25. This guide stop 25 is a washer with a shape that allows mounting it in the hole 14 of the base 11 b of the support unit 10. The main elastic means 30 is a compression spring mounted concentrically around the regulating element 20. Said main elastic means 30 is supported in the guide stop 25, exerting force Tp on the stop 24, and therefore causing a pulling on the regulating element 20, and accordingly pulling on the cable, tensioning it. The secondary elastic means 60 is mounted concentrically around the regulating element 20, exerting force Ts on the ratchet support 45 in the opposite direction of force Tp of the main elastic means 30. The elastic constant of the main elastic means 30 is greater than the elastic constant of the secondary elastic means 60, force Tp therefore being greater than force Ts. In one embodiment, force Tp is of about 50 Newtons (N), and force Ts is of about 19 N.

The manner in which the device 100 operates in different situations of the brake lever 110 of the parking brake 200 will be explained below.

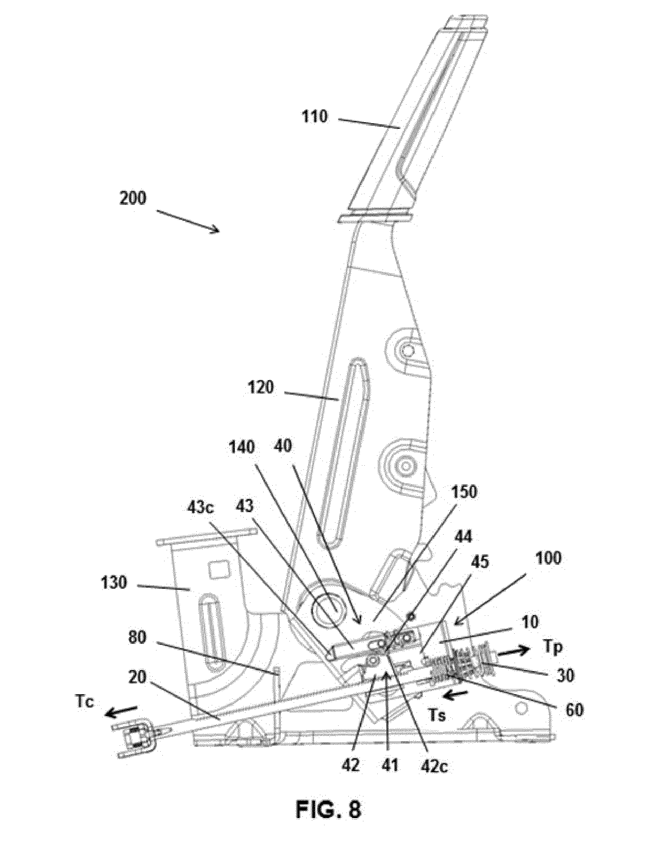

Figure 8 shows a side sectional view of the parking brake 200 shown in Figures 1-3, with the brake lever 110 in the active position. When the brake lever 110 is in the active position, and therefore the parking brake 200 is activated, the body 120 has rotated integrally with the shaft 140, and the lever cam 150 has also rotated integrally with said shaft 140. The rotation of the lever cam 150 causes the support unit 10 of the device 100 to pivot, said device 100 maintaining the position with respect to the direction of the regulating element, and therefore the direction of the cable. The rotation of the lever cam 150 causes linear movement of the device 100, and therefore linear movement of the regulating element 20 to the right, causing the stretching of the cable. The stretching of the cable causes a pull on the vehicle brake pads, which are activated against the brake drum, and the cable is subjected to a high tension Tc. In one embodiment, this cable tension Tc is of about 5000 N and is transmitted to the locking assembly 40 through the regulating element 20, to the ratchet 41 which is coupled to the regulating element 20, and from the ratchet 41 to the ratchet support 45, the locking assembly 40 being positioned in the initial position. The main elastic means 30 exert a force Tp, which is of about 50 N, and it is transmitted to the locking assembly 40 by means of the pull exerted by the main elastic means 30 on the regulating element 20. On the other hand, the secondary elastic means 60 exerts a force Ts on the ratchet support 45, and therefore on the locking assembly 40, which force Ts is of about 19 N when the locking assembly 40 is in the initial position.

The locking assembly 40 is subjected to force Tp in one direction and subjected to tension Tc and to force Ts in the opposite direction. Since tension Tc is much greater than force Tp, it produces torque on the shaft 51 interlocking the ratchet 41 on the regulating element 20 with greater force, preventing relative movement of the regulating element 20, and therefore preventing the cable from loosening. Furthermore, the pushing unit 43 is in the release position, and therefore the protrusion 44 is supported in the area 42c of the ratchet 41, locking it.

When the brake lever 110 is released from the active position in its movement towards the rest position, the cable is subjected to tension Tc which decreases from the active position. When it has almost reached the rest position, the cable tension Tc is about equal to the force Tp of the main elastic means 30. In said position, the pushing unit 43 is in the release position, locking the ratchet 41, and therefore the locking assembly 40 is in the initial position. The locking assembly 40 is subjected to tension Tc and to force Ts in one direction, and to force Tp in the opposite direction, remaining in the initial position provided that force Tc is greater than force Tp, and provided that Ts is greater than the difference between force Tp and tension Tc if force Tp is greater than force Tc.

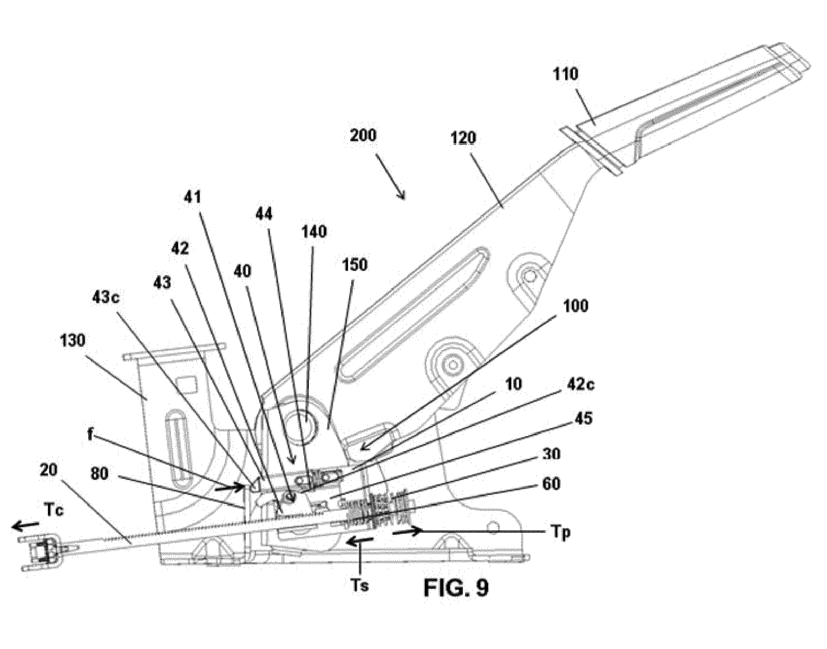

Figure 9 shows a side sectional view of the parking brake 200 shown in Figures 1-3, with the brake lever 110 in the rest position and the regulating element 20, which is coupled to the cable, subjected to tension Tc. When the brake lever 110 is in the rest position, and therefore the parking brake 200 is deactivated, the body 120 has rotated integrally with the shaft 140, and with said shaft 140 the lever cam 150 has also rotated integrally to a position vertical. The rotation of the lever cam 150 causes the support unit 10 of the device 100 to pivot, said device 100 at all times maintaining the position with respect to the direction of the regulating element and therefore the direction of the cable. The rotation of the lever cam 150 causes linear movement of the device 100, and therefore linear movement of the regulating element 20 to the left, causing the loosening of the cable. The loosening of the cable causes the vehicle brake pads to move away from the brake drum, and the cable is subjected to a low tension Tc, which is about equal to force Tp, for example of 48 N, in this embodiment.

One end 43c of the pushing unit 43 interferes with the stop 80 of the support 130 of the parking brake 200, the pushing unit 43 being pushed to the pushed position. This pushing on the pushing unit 43 is transmitted to the locking assembly 40, producing a force f in a direction that is opposite to cable tension Tc, this force f being very low, for example of about 7 N. In the pushed position, the protrusion 44 of the pushing unit 43 is not supported in the area 42c of the ratchet 41, so said ratchet 41 is not locked, and the regulating element 20 is free to move relative to the ratchet 41 in the direction of the main elastic means 30. The locking assembly 40 is subjected to the sum of tension Tc and to force Ts in one direction, and to the sum of force f and force Tp in the opposite direction, the locking assembly 40 remaining in the initial position provided that force Ts of the secondary elastic means 60 is greater than the resultant of forces Tp, Tc and f. In said position, the main elastic means 30 pulls on the regulating element 20 when cable tension Tc decreases and allows maintaining the cable tensioned.

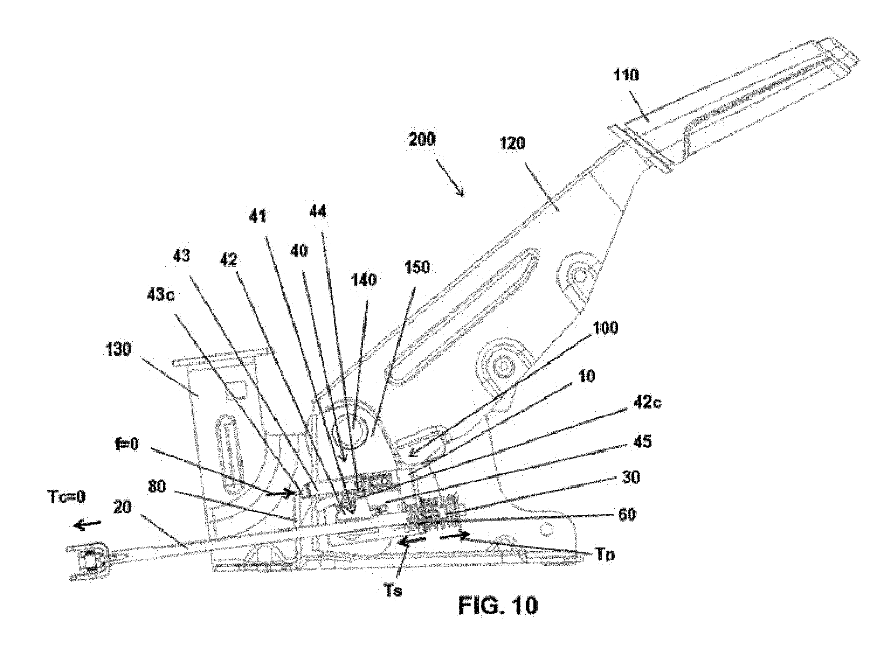

Figure 10 shows a side sectional view of the parking brake 200 shown in Figures 1-3, with the brake lever 110 in the rest position, and the regulating element 20, which is coupled to the cable, is not subjected to tension Tc. When the brake lever 110 is in the active position and the cable is not subjected to tension Tc, for example when the vehicle brake pads have frozen and are stuck to the brake drum, if said brake lever 110 is moved to the rest position, the regulating element 20 is subjected to a difference of force Tp of the main elastic means 30 and force Ts of the secondary elastic means 60. In that situation, and before the brake lever 110 reaches the rest position, the pushing unit 43 is in the release position with the ratchet 41 locked. The locking assembly 40, which is subjected to force Tp in one direction and to force Ts in the opposite direction, passes to the end position, as force Tp is significantly greater than force Ts, and the main elastic means 30 pulls on the regulating element 20. The regulating element 20 pulls on the ratchet support 45 through the ratchet 41.

The secondary elastic means 60 is thus compressed, and the range of movement of the cable is small.
When the brake lever 110 reaches the rest position, the pushing unit 43 is in the release position, and the end 43c of said pushing unit 43 does not interfere with the stop 80 and is not pushed by it, said end 43c being level with the stop 80. In that situation, the ratchet 41 is locked by pushing unit 43, and therefore the regulating element 20 cannot move, so excessive automatic cable tensioning due to the traction of the main elastic means 30 does not occur, said cable being loose. When the brake pads defrost, the cable moves back due to the action of the pads and is tensioned, tension Tc returning in the cable, which is about equal to force Tp of the main elastic means. The balance between tension Tc and force Tp is restored, and due to force Ts of the secondary elastic means 60 the locking assembly 40 moves back to the initial position, driving the pushing unit 43 with it. Therefore, and as explained above, the pushing unit 43 is pushed by the stop 80 and is subjected to force f, the pushing unit 43 passing to the pushed position, releasing the ratchet 41, and allowing relative movement of the regulating element 20. Therefore, the aforementioned situation of the brake lever 110 in the rest position and the regulating element 20, which is coupled to the cable, not subjected to tension Tc is reproduced.

When it is necessary to change the vehicle brake pads, before releasing the cable from said brake pads, the brake lever 110 must be located in the rest position in order to deactivate the parking brake 200. Upon releasing the cable, the regulating element 20 of the device 100 is not subjected to tension Tc, and the main elastic means 30 pulls on the regulating element like in the situation in which the brake pads are frozen. The locking assembly 40 is in the end position, and the regulating element 20 is locked due to the action of the protrusion 44 in the area 42c of the ratchet 41. Once the brake pads have been changed, the cable must be reconnected and tensioned. Since the locking assembly 40 is in the end position, and the cable must be connected with the brake pads not being activated, the locking assembly must be moved to the initial position. To that end, the pushing unit 43 is pushed manually and passes to the pushed position, unlocking the ratchet 41. Said ratchet 41 comprises in its body 42 a protrusion 42f projecting in the direction of the cable. By pressing the protrusion 42f, the ratchet 41 pivots around the shaft 51, and the coupling between the ratchet 41 and the regulating element 20 is released.

Therefore, the locking assembly 40 can be taken to the initial position, and the cable can be connected in its correct position. Once the cable is connected, it recovers tension Tc, and with the brake lever 110 in the rest position the main elastic means 30 allow regulating cable tension Tc.

## Claims

1. Automatic cable tensioning device (100) suitable for parking brakes, comprising a support unit (10) suitable for being coupled to a brake lever (110) of a parking brake (200), a regulating element (20) suitable for being coupled to the cable, main elastic means (30) suitable for regulating cable tension Tc acting on the regulating element (20), and a locking assembly (40) which is coupled in the support unit (10), the locking assembly (40) comprising a ratchet (41) coupled to the regulating element (20) in the range of movement of the brake lever (110) between a rest position in which the parking brake (200) is deactivated and allows relative movement of the regulating element (20) with respect to the ratchet (41) for tensioning the cable, and an active position in which the parking brake (200) is activated, the ratchet (41) of the locking assembly (40) preventing relative movement of the regulating element (20) for loosening the cable, **characterized in that** the locking assembly (40) comprises a pushing unit (43) locking the ratchet (41), the locking of the ratchet (41) causing the locking of the relative movement of the regulating element (20) with respect to the device (100) when the brake lever (110) is in the rest position and the cable is not subjected to tension Tc.

2. Device according to the preceding claim, wherein the locking assembly (40) comprises elastic means (70) coupled to the pushing unit (43), the elastic means (70) allowing the movement of the pushing unit (43) between a pushed position, in which the pushing unit (43) does not lock the ratchet (41), and a release position in which the pushing unit (43) locks the ratchet (41).

3. Device according to the preceding claim, wherein the pushing unit (43) is pushed to the pushed position by a fixed stop (80) of the parking brake (200), or manually.

4. Device according to claim 2 or 3, wherein the elastic means (70) of the locking assembly (40) is a compression spring.

5. Device according to any of claims 2 to 4, wherein the locking assembly (40) comprises a ratchet support (45) coupled to the support unit (10) in a sliding manner, the ratchet (41) being attached to the ratchet support (45) in a pivoting manner, and the pushing unit (43) being coupled to the ratchet support (45) in a sliding manner, the elastic means (70) allowing relative movement of the pushing unit (43) with respect to the ratchet support (45) upon passing from the pushed position to the release position, the device (100) comprising secondary elastic means (60) arranged between the support unit (10) and the ratchet support (45), the main elastic means (30) allowing the movement of the locking assembly (40) to an end position, upon pulling on the ratchet support (45) when the cable tension Tc is inexistent, and the secondary elastic means (60) allowing the movement of the locking assembly (40) to an initial position, upon pushing the ratchet support (45) when the cable is subjected to tension Tc.

6. Device according to the preceding claim, wherein the secondary elastic means (60) is a compression spring and the main elastic means (30) is a compression spring of greater force than the secondary elastic means (60), the secondary elastic means (60) producing a force Ts on the ratchet support (45) smaller than and in the opposite direction with respect to a force Tp produced by the main elastic means (30) on the regulating element (20).

7. Device according to the preceding claim, wherein in the active position of the brake lever (110) and with the cable subjected to tension Tc, tension Tc is greater than force Tp of the main elastic means (30), the locking assembly (40) in the initial position being subjected to force Tp in one direction, and being subjected to tension Tc and to force Ts of the secondary elastic means (60) in the opposite direction, the pushing unit (43) in the release position locking the ratchet (41), the cable tension Tc generating a torque with respect to the pivot axis of the ratchet (41), interlocking the ratchet (41) with the regulating element (20), preventing relative movement of the regulating element (20) for loosening the cable.

8. Device according to claim 6 or 7, wherein in the movement of the brake lever (110) when it is released from the active position and before the rest position, the cable is subjected to tension Tc which is about equal to force Tp when it reaches the rest position, the pushing unit (43) is in the release position locking the ratchet (41), and the locking assembly (40) is in the initial position subjected to tension Tc and to force Ts in one direction, and to force Tp in the opposite direction, remaining in the initial position provided that tension Tc is greater than force Tp, and provided that force Ts is greater than the difference between force Tp and tension Tc if force Tp is greater than tension Tc.

9. Device according to any of claims 6 to 8, wherein in the rest position of the brake lever (110) and with the cable subjected to tension Tc, which is about equal to force Tp, the pushing unit (43) is pushed by the stop (80) to the pushed position and is subjected to a force f that is transmitted to the locking assembly (40), without locking the ratchet (41), allowing relative movement of the regulating element (20), the locking assembly (40) being subjected to the sum of tension Tc and to force Ts in one direction, and to force Tp and to force f in the opposite direction, the locking assembly remaining in the initial position when force Ts is greater than the difference between the sum of force Tp and force f, and tension Tc, thus allowing the movement of the regulating element (20) and the regulation of tension Tc.

10. Device according to any of claims 6 to 9, wherein in the movement of the brake lever (110) when it is released from the active position and before the rest position, and the cable is not subjected to tension Tc, the pushing unit (43) is in the release position locking the ratchet (41), and the locking assembly (40), which is subjected to force Tp in one direction greater than force Ts in the opposite direction, passes to the end position compressing the secondary elastic means (60), the pushing unit (43) not being pushed by the stop (80) when the brake lever (110) reaches the rest position, maintaining the locking of the ratchet (41) and preventing relative movement of the regulating element (20), the secondary elastic means (60) moving the locking assembly (40) to the initial position when the cable is again subjected to tension Tc, pushing the stop (80) to the pushing unit (43) and passing to the pushed position, releasing the ratchet (41) and allowing relative movement of the regulating element (20), maintaining this initial position when force Ts is greater than the difference between the sum of force Tp and force f, and tension Tc.

11. Device according to any of claims 5 to 10, wherein the ratchet support (45) is U-shaped with two side walls (45a) each comprising at least two holes (45b), and an additional hole (45c) at a different height with respect to the at least two holes (45b), the holes traversing them, the ratchet (41) comprising a body (42) with a hole (42e) traversing it, and the pushing unit (43) comprising at least two elongated holes (43b) traversing it, the support unit (10) having a U shape lying on its side, with two side walls (11 a) each comprising at least one elongated hole (12), and one elongated hole (13) that are at different heights, the holes traversing them, and a protrusion (15) in each of the side walls (11 a) on the outer side which allow coupling the support unit (10) in a pivoting manner to the brake lever (110), the device (100) comprising at least two shafts (50) traversing the at least one elongated hole (12) of the support unit (10), the at least two holes (45b) of the ratchet support (45), and the at least two elongated holes (43b) of the pushing unit (43), allowing the ratchet support (45) to slide with respect to the support unit (10), and a shaft (51) traversing the elongated hole (13) of the support unit (10), the additional hole (45c) of the ratchet support (45), and the hole (42e) of the body (42) of the ratchet (41), allowing the ratchet (41) to pivot with respect to said shaft (51), and the ratchet support (45) comprising a base (45e) with a guided area (45f) running along it longitudinally, and an orifice (45g) in a wall (45d), arranged between the side walls (45a), the orifice traversing it, and the support unit (10) comprises a base (11b) with an orifice (14) traversing it, the regulating element (20) being mounted in the locking unit (40) being supported in a sliding manner in the guided area (45f) of the ratchet support (45), traversing the orifice (14) of the support unit (10), and the orifice (45g) of the ratchet support (45), and the secondary elastic means (60) being arranged between the base (11b) of the support unit (10) and the wall (45d) of the ratchet support (45).

12. Device according to the preceding claim, wherein the regulating element (20) comprises one end (22) attached to an equalizer (90) of the parking brake (200) allowing the coupling with the cable, and one end (23) to which there is attached a stop (24), the main elastic means (30) being arranged between the stop (24) and a guide stop (25) which is supported in the support unit (10), the main elastic means (30) and the secondary elastic means (60) concentrically surrounding the regulating element (20).

13. Device according to claim 11 or 12, wherein the body (42) of the ratchet (41) comprises a surface (42b), facing the regulating element (20), with a notched area (42d), and the regulating element (20) comprises in a portion of its outer surface a notched area (21), facing the notched area (42d) of the ratchet (41), the locking assembly (40) comprising elastic means (46) coupled to the ratchet (41), which allows maintaining the coupling between the ratchet (41) and the regulating element (20), coupling the notched area (42d) of the body (42) of the ratchet (41) and the notched area (21) of the regulating element (20), the body (42) of the ratchet (41) comprising a surface (42a) with a horizontal area (42c), and the pushing unit (43) comprising a surface (43a), facing the surface (42a) of the ratchet (41), with a protrusion (44), the support of said protrusion (44) in the horizontal area (42c) allowing the locking of the ratchet (41) and thereby the locking of the regulating element (20), and the body (42) of the ratchet (41) comprising a protrusion (42f) projecting in the direction of the cable, said protrusion (42f) allowing manually pressing to release the coupling between the ratchet (41) and the regulating element (20).

14. Parking brake **characterized in that** it comprises an automatic cable tensioning device (100) according to any of the preceding claims.

15. Parking brake according to the preceding claim, comprising a body (120) with the brake lever (110) at its end, a support (130) with side walls (131) each comprising a hole (132), a shaft (140) with one end integrally fixed in the body (120) in a hole (132) and the other end connected in a rotational manner in the other hole (132) of the support (130), and a lever cam (150) integrally fixed in the shaft (140) comprising two side walls (151) with a hole (152) in each of the walls (151) where the support unit (10) is coupled in a pivoting manner, allowing the movement of the brake lever (110) between the rest position and the active position, the rotation of the lever cam (150), and in turn causing the movement of the device (100) and stretching of the cable.

## Patentansprüche

1. Automatische Kabelspannvorrichtung (100), die sich für Feststellbremsen eignet, umfassend eine Trägereinheit (10), die dazu geeignet ist, mit einem Bremshebel (110) einer Feststellbremse (200) verbunden zu werden, ein Regulierungselement (20), das dazu geeignet ist, mit dem Kabel verbunden zu werden, ein primäres elastisches Mittel (30), das dazu geeignet ist, eine Kabelspannung Tc zu regulieren, die auf das Regulierungselement (20) wirkt, und eine Verriegelungsanordnung (40), die in der Trägereinheit (10) verbunden ist, wobei die Verriegelungsanordnung (40) eine Sperrklinke (41) umfasst, die mit dem Regulierungselement (20) verbunden ist, im Bewegungsbereich des Bremshebels (110), zwischen einer Ruheposition, in der die Feststellbremse (200) deaktiviert ist und die eine relative Bewegung des Regulierungselements (20) in Bezug auf die Sperrklinke (41) zum Spannen des Kabels ermöglicht, und einer aktiven Position, in der die Feststellbremse (200) aktiviert ist, wobei die Sperrklinke (41) der Verriegelungsanordnung (40) eine relative Bewegung des Regulierungselements (20) zum Lockern des Kabels ermöglicht, **dadurch gekennzeichnet, dass** die Verriegelungsanordnung (40) eine Schiebeeinheit (43) umfasst, die die Sperrklinke (41) verriegelt, wobei das Verriegeln der Sperrklinke (41) das Verriegeln der relativen Bewegung des Regulierungselements (20) in Bezug auf die Vorrichtung (100) bewirkt, wenn der Bremshebel (110) sich in der Ruheposition befindet und das Kabel keiner Spannung Tc ausgesetzt ist.

2. Vorrichtung nach dem vorstehenden Anspruch, wobei die Verriegelungsanordnung (40) ein elastisches Mittel (70) umfasst, das mit der Schiebeeinheit (43) verbunden ist, wobei das elastische Mittel (70) die Bewegug der Schiebeeinheit (43) zwischen einer geschobenen Position, in der die Schiebeeinheit (43) die Sperrklinke (41) nicht verriegelt, und einer Freigabeposition, in der die Schiebeeinheit (43) die Sperrklinke (41) verriegelt, ermöglicht.

3. Vorrichtung nach dem vorstehenden Anspruch, wobei die Schiebeeinheit (43) durch einen fixen Anschlag (80) der Feststellbremse (200) oder manuell in die geschobene Position geschoben wird.

4. Vorrichtung nach Anspruch 2 oder 3, wobei das elastische Mittel (70) der Verriegelungsanordnung (40) eine Druckfeder ist.

5. Vorrichtung nach einem der Ansprüche 2 bis 4, wobei die Verriegelungsanordnung (40) einen Sperrklinkenträger (45) umfasst, der mit der Trägereinheit (10) gleitverbunden ist, wobei die Sperrklinke (41) schwenkend am Sperrklinkenträger (45) angebracht ist, und die Schiebeeinheit (43) mit dem Sperrklinkenträger (45) gleitverbunden ist, wobei das elastische Mittel (70) eine relative Bewegung der Schiebeeinheit (43) in Bezug auf den Sperrklinkenträger (45) beim Übergehen von der geschobenen Position in die Freigabeposition ermöglicht, wobei die Vorrichtung (100) ein sekundäres elastisches Mittel (60) umfasst, das zwischen der Trägereinheit (10) und dem Sperrklinkenträger (45) angeordnet ist, wobei das primäre elastische Mittel (30) die Bewegung der Verriegelungsanordnung (40) bei Ziehen am Sperrklinkenträger (45) in eine Endposition ermöglicht, wenn die Kabelspannung Tc nicht vorhanden ist, und wobei das sekundäre elastische Mittel (60) die Bewegung der Verriegelungsanordnung (40) durch Schieben des Sperrklinkenträgers (45) in eine Ausgangsposition ermöglicht, wenn das Kabel einer Spannung Tc ausgesetzt ist.

6. Vorrichtung nach dem vorstehenden Anspruch, wobei das sekundäre elastische Mittel (60) eine Druckfeder ist und das primäre elastische Mittel (30) eine Druckfeder mit einer größeren Kraft als das sekundäre elastische Mittel (60) ist, wobei das sekundäre elastische Mittel (60) eine Kraft Ts auf den Sperrklingenträger (45) anlegt, die geringer als eine Kraft Tp ist, die vom primären elastischen Mittel (30) auf das Regulierungselement (20) angelegt wird, und in der dieser entgegengesetzten Richtung verläuft.

7. Vorrichtung nach dem vorstehenden Anspruch, wobei die Spannung Tc, wenn sich der Bremshebel (110) in der aktiven Position befindet und das Kabel der Spannung Tc ausgesetzt ist ist, größer als die Kraft Tp des primären elastischen Mittels (30) ist, wobei die Verriegelungsanordnung (40) in der Ausgangsposition der Kraft Tp in eine Richtung ausgesetzt wird und der Spannung Tc und der Kraft Ts des sekundären elastischen Mittels (60) in die entgegengesetzte Richtung ausgesetzt wird, wobei die Schiebeeinheit (43) in der Freigabeposition die Sperrklinke (41) verriegelt, wobei die Kabelspannung Tc ein Drehmoment in Bezug auf die Schwenkachse der Sperrklinke (41) erzeugt, wobei die Sperrklinke (41) mit dem Regulierungselement (20) verriegelt wird, wobei eine relative Bewegung des Regulierungselements (20) zum Lockern des Kabels verhindert wird.

8. Vorrichtung nach Anspruch 6 oder 7, wobei das Kabel bei der Bewegung des Bremshebels (110), wenn dieser aus der aktiven Position freigegeben wird und sich vor der Ruheposition befindet, der Spannung Tc ausgesetzt ist, die ungefähr gleich wie die Kraft Tp ist, wenn er die Ruheposition erreicht, wobei sich die Schiebevorrichtung (43) in der Freigabeposition befindet, die die Sperrklinke (41) verriegelt, und sich die Verriegelungsanordnung (40) in der Ausgangsposition befindet, ausgesetzt gegenüber der Spannung Tc und der Kraft Ts in eine Richtung und der Kraft Tp in die entgegengesetzte Richtung, wobei sie in der Ausgangsposition bleibt, mit der Maßgabe, dass die Spannung Tc größer als die Kraft Tp ist, und mit der Maßgabe, dass die Kraft Ts größer als der Unterschied zwischen der Kraft Tp und der Spannung Tc ist, wenn die Kraft Tp größer als die Spannung Tc ist.

9. Vorrichtung nach einem der Ansprüche 6 bis 8, wobei die Schiebeeinheit (43), wenn sich der Bremshebel (110) in der Ruheposition befindet und das Kabel der Spannung Tc ausgesetzt ist, die ungefähr gleich wie die Kraft Tp ist, durch den Anschlag (80) in die geschobene Position geschoben wird und einer Kraft f ausgesetzt wird, die auf die Verriegelungsanordnung (40) übertragen wird, ohne dass die Sperrklinke (41) verriegelt wird, wobei die relative Bewegung des Regulierungselements (20) ermöglicht wird, wobei die Verriegelungsanordnung (40) der Summe der Spannung Tc und der Kraft Ts in eine Richtung und der Kraft Tp und der Kraft f in die entgegengesetzte Richtung ausgesetzt wird, wobei die Verriegelungsanordnung in der Ausgangsposition bleibt, wenn die Kraft Ts größer als der Unterschied zwischen der Summe von Kraft Tp und Kraft f und Spannung Tc ist, wodurch die Bewegung des Regulierungselements (20) und das Regulieren der Spannung Tc ermöglicht werden.

10. Vorrichtung nach einem der Ansprüche 6 bis 9, wobei sich die Schiebeeinheit (43) bei der Bewegung des Bremshebels (110), wenn dieser aus der aktiven Position freigegeben ist und sich vor der Ruheposition befindet und das Kabel keiner Spannung Tc ausgesetzt ist, in der Freigabeposition befindet, die die Sperrklinke (41) verriegelt, und wobei die Verriegelungsanordnung (40), die der Kraft Tp in eine Richtung ausgesetzt ist, die größer als die Kraft Ts in die entgegengesetzte Richtung ist, in die Endposition übergeht, wobei sie das sekundäre elastische Mittel (60) zusammendrückt, wobei die Schiebeeinheit (43) nicht vom Anschlag (80) geschoben wird, wenn der Bremshebel (110) die Ruheposition erreicht, wobei die Verriegelung der Sperrklinke (41) gehalten wird und eine relative Bewegung des Regulierungselements (20) verhindert wird, wobei das sekundäre elastische Mittel (60) die Verriegelungsanordnung (40) in die Ausgangsposition bewegt, wenn das Kabel erneut der Spannung Tc ausgesetzt ist, den Anschlag (80) zur Schiebeeinheit (43) schiebt und in die geschobene Position übergeht, wobei die Sperrklinke (41) freigegeben und eine relative Bewegung des Regulierungselements (20) ermöglicht wird, wobei diese Ausgangsposition gehalten wird, wenn die Kraft Ts größer als der Unterschied zwischen der Summe von Kraft Tp und Kraft f und Spannung Tc ist.

11. Vorrichtung nach einem der Ansprüche 5 bis 10, wobei der Sperrklinkenträger (45) U-förmig ist und zwei Seitenwände (45a) aufweist, die jeweils zumindest zwei Löcher (45b) und ein weiteres Loch (45c) in einer anderen Höhe als die zumindest zwei Löcher (45b) umfassen, wobei die Löcher diese durchqueren, wobei die Sperrklinke (41) einen Körper (42) mit einem Loch (42e) umfasst, das diesen durchquert, und wobei die Schiebeeinheit (43) zumindest zwei Längslöcher (43b) umfasst, die diese durchqueren, wobei die Trägereinheit (10) eine U-Form aufweist, auf der Seite davon liegend, mit zwei Seitenwänden (11a), die jeweils zumindest ein Längsloch (12) und ein Längsloch (13) umfassen, die in unterschiedlichen Höhen angeordnet sind, wobei die Löcher diese durchqueren, und einen Vorsprung (15) in jeder der Seitenwände (11a) auf der Außenseite, die eine Schwenkverbindung der Trägereinheit (10) mit dem Bremshebel (110) ermöglichen, wobei die Vorrichtung (100) zumindest zwei Wellen (50) umfasst, die das zumindest eine Längsloch (12) der Trägereinheit (10), die zumindest zwei Löcher (45b) des Sperrklinkenträgers (45) und die zumindest zwei Längslöcher (43b) der Schiebeeinheit (43) durchqueren, wobei dem Sperrklinkenträger (45) ein Gleiten in Bezug auf die Trägereinheit (10) ermöglicht wird, und eine Welle (51), die das Längsloch (13) der Trägereinheit (10), das weitere Loch (45c) des Sperrklinkenträgers (45) und das Loch (42e) des Körpers (42) der Sperrklinke (41) durchquert, wobei der Sperrklinke (41) ein Schwenken in Bezug auf die Welle (51) ermöglicht wird, und wobei der Sperrklinkenträger (45) eine Basis (45e) mit einem geführten Bereich (45f), der längswärts entlang dieser verläuft, und einer Öffnung (45g) in einer Wand (45d) umfasst, die zwischen den Seitenwänden (45a) angeordnet ist, wobei die Öffnung diese durchquert, und wobei die Trägereinheit (10) eine Basis (11 b) mit einer Öffnung (14), die diese durchquert, umfasst, wobei das Regulierungselement (20), das in der Verriegelungsanordnung (40) befestigt ist, im geführten Bereich (45f) des Sperrklinkenträgers (45) gleitend getragen wird, die Öffnung (14) der Trägereinheit (10) und die Öffnung (45g) des Sperrklinkenträgers (45) durchquerend, und wobei das sekundäre elastische Mittel (60) zwischen der Basis (11 b) der Trägereinheit (10) und der Wand (45d) des Sperrklinkenträgers (45) angeordnet ist.

12. Vorrichtung nach dem vorstehenden Anspruch, wobei das Regulierungselement (20) ein Ende (22) umfasst, das an einem Bremsausgleicher (90) der Feststellbremse (200) angebracht ist, das die Verbindung mit dem Kabel ermöglicht, und ein Ende (23), an dem ein Anschlag (24) angebracht ist, wobei das primäre elastische Mittel (30) zwischen dem Anschlag (24) und einem Führungsanschlag (25) angeordnet ist, der in der Trägereinheit (10) getragen wird, wobei das primäre elastische Mittel (30) und das sekundäre elastische Mittel (60) das Regulierungselement (20) konzentrisch umgeben.

13. Vorrichtung nach Anspruch 11 oder 12, wobei der Körper (42) der Sperrklinke (41) eine dem Regulierungselement 20 zugewandte Oberfläche (42b) mit einem gekerbten Bereich (42d) umfasst und wobei das Regulierungselement (20) in einem Abschnitt seiner Außenfläche einen gekerbten Bereich (21) umfasst, der dem gekerbten Bereich (42d) der Sperrklinke (41) zugewandt ist, wobei die Verriegelungsanordnung (40) ein elastisches Mittel (46) umfasst, das mit der Sperrklinke (41) verbunden ist, das das Halten der Verbindung zwischen der Sperrklinke (41) und dem Regulierungselement (20) ermöglicht, wobei der gekerbte Bereich (42d) des Körpers (42) der Sperrklinke (41) und der gekerbte Bereich (21) des Regulierungselements (20) verbunden sind, wobei der Körper (42) der Sperrklinke (41) eine Oberfläche (42a) mit einem horizontalen Bereich (42c) umfasst und die Schiebeeinheit (43) eine der Oberfläche (42a) der Sperrklinke (41) zugewandte Oberfläche (43a) mit einem Vorsprung (44) umfasst, wobei der Träger des Vorsprungs (44) im horizontalen Bereich (42c) das Verriegeln der Sperrklinke (41) und damit das Verriegeln des Regulierungselements (20) ermöglicht, und wobei der Körper (42) der Sperrklinke (41) einen Vorsprung (42f) umfasst, der in die Richtung des Kabels vorsteht, wobei der Vorsprung (42f) ein manuelles Drücken ermöglicht, um die Verbindung zwischen der Sperrklinke (41) und dem Regulierungselement (20) freizugeben.

14. Feststellbremse, **dadurch gekennzeichnet, dass** sie eine automatische Kabelspannvorrichtung (100) nach einem der vorstehenden Ansprüche umfasst.

15. Feststellbremse nach dem vorstehenden Anspruch, umfassend einen Körper (120), an dessen Ende sich der Bremshebel (110) befindet, einen Träger (130) mit Seitenwänden (131), die jeweils ein Loch (132) umfassen, eine Welle (140), dessen eines Ende im Körper (120) in einem Loch (132) integral fixiert ist und dessen anderes Ende im anderen Loch (132) des Trägers (130) drehverbunden ist, und einen Hebelnocken (150), der in der Welle (140) integral fixiert ist, umfassend zwei Seitenwände (151) mit einem Loch (152) in jedem der Wände (151), wo die Trägereinheit (10) schwenkverbunden ist, wobei eine Bewegung des Bremshebels (110) zwischen der Ruheposition und der aktiven Position, die Drehung des Hebelnockens (150) ermöglicht werden und wiederum die Bewegung der Vorrichtung (100) und ein Dehnen des Kabels bewirkt werden.

## Revendications

1. Dispositif de tension de câble automatique (100) approprié pour les freins de stationnement, comprenant une unité de support (10) appropriée pour être couplée à un levier de frein (110) d'un frein de stationnement (200), un élément de régulation (20) approprié pour être couplé au câble, un moyen élastique principal (30) approprié pour réguler la tension de câble Tc agissant sur l'élément de régulation (20) et un ensemble de blocage (40) qui est couplé à l'unité de support (10), l'ensemble de blocage (40) comprenant un encliquetage (41) couplé à l'élément de régulation (20) dans la plage de mouvement du levier de frein (110) entre une position de repos dans laquelle le frein de stationnement (200) est désactivé et permet le mouvement relatif de l'élément de régulation (20) par rapport à l'encliquetage (41) pour tendre le câble, et une position active dans laquelle le frein de stationnement (200) est activé, l'encliquetage (41) de l'ensemble de blocage (40) empêchant le mouvement relatif de l'élément de régulation (20) pour desserrer le câble, **caractérisé en ce que** l'ensemble de blocage (40) comprend une unité de poussée (43) verrouillant l'encliquetage (41), le blocage de l'encliquetage (41) provoquant le blocage du mouvement de l'élément de régulation (20) par rapport au dispositif (100) lorsque le levier de frein (110) est dans la position de repos et que le câble n'est pas soumis à la tension Tc.

2. Dispositif selon la revendication précédente, dans lequel l'ensemble de blocage (40) comprend un moyen élastique (70) couplé à l'unité de poussée (43), le moyen élastique (70) permettant le mouvement de l'unité de poussée (43) entre une position poussée dans laquelle l'unité de poussée (43) ne bloque pas l'encliquetage (41) et une position de libération dans laquelle l'unité de poussée (43) bloque l'encliquetage (41).

3. Dispositif selon la revendication précédente, dans lequel l'unité de poussée (43) est poussée dans la position poussée par une butée fixe (80) du frein de stationnement (200) ou manuellement.

4. Dispositif selon la revendication 2 ou 3, dans lequel le moyen élastique (70) de l'ensemble de blocage (40) est un ressort de compression.

5. Dispositif selon l'une quelconque des revendications 2 à 4, dans lequel l'ensemble de blocage (40) comprend un support d'encliquetage (45) couplé à l'unité de support (10) d'une manière coulissante, l'encliquetage (41) étant fixé au support d'encliquetage (45) d'une manière pivotante, et l'unité de poussée (43) étant couplée au support d'encliquetage (45) d'une manière coulissante, le moyen élastique (70) permettant le mouvement relatif de l'unité de poussée (43) par rapport au support d'encliquetage (45) après être passé de la position poussée à la position de libération, le dispositif (100) comprenant un moyen élastique secondaire (60) agencé entre l'unité de support (10) et le support d'encliquetage (45), le moyen élastique principal (30) permettant le mouvement de l'ensemble de blocage (40) dans une position d'extrémité, après avoir tiré sur le support d'encliquetage (45) lorsque la tension de câble Tc est inexistante, et le moyen élastique secondaire (60) permettant le mouvement de l'ensemble de blocage (40) dans une position initiale, après avoir poussé le support d'encliquetage (45) lorsque le câble est soumis à la tension Tc.

6. Dispositif selon la revendication précédente, dans lequel le moyen élastique secondaire (60) est un ressort de compression et le moyen élastique principal (30) est un ressort de compression de force supérieure au moyen élastique secondaire (60), le moyen élastique secondaire (60) produisant une force Ts sur le support d'encliquetage (45) inférieure et dans la direction opposée par rapport à une force Tp produite par le moyen élastique principal (30) sur l'élément de régulation (20).

7. Dispositif selon la revendication précédente, dans lequel, dans la position active du levier de frein (110) et avec le câble soumis à la tension Tc, la tension Tc est supérieure à la force Tp du moyen élastique principal (30), l'ensemble de blocage (40) dans la position initiale étant soumis à la force Tp dans une direction, et étant soumis à la tension Tc et à la force Ts du moyen élastique secondaire (60) dans la direction opposée, l'unité de poussée (43) dans la position de libération bloquant l'encliquetage (41), la tension de câble Tc générant un couple par rapport à l'axe de pivot de l'encliquetage (41), verrouillant l'encliquetage (41) avec l'élément de régulation (20), empêchant le mouvement relatif de l'élément de régulation (20) pour desserrer le câble.

8. Dispositif selon la revendication 6 ou 7, dans lequel dans le mouvement du levier de frein (110), lorsqu'il est libéré de la position active et avant la position de repos, le câble est soumis à la tension Tc qui est à peu près égale à la force Tp lorsqu'il atteint la position de repos, l'unité de poussée (43) est dans la position de libération, bloquant l'encliquetage (41) et l'ensemble de blocage (40) est dans la position initiale, soumis à la tension Tc et à la force Ts dans une direction, et à la force Tp dans la direction opposée, restant dans la position initiale pourvu que la tension Tc soit supérieure à la force Tp, et pourvu que la force Ts soit supérieure à la différence entre la force Tp et la tension Tc si la force Tp est supérieure à la tension Tc.

9. Dispositif selon l'une quelconque des revendications 6 à 8, dans lequel, dans la position de repos du levier de frein (110) et avec le câble soumis à la tension Tc qui est à peu près égale à la force Tp, l'unité de poussée (43) est poussée par la butée (80) dans la position poussée et est soumise à une force f qui est transmise à l'ensemble de blocage (40) sans bloquer l'encliquetage (41), permettant le mouvement relatif de l'élément de régulation (20), l'ensemble de blocage (40) étant soumis à la somme de tension Tc et à la force Ts dans une direction et à la force Tp et à la force f dans la direction opposée, l'ensemble de blocage restant dans la position initiale lorsque la force Ts est supérieure à la différence entre la somme de la force Tp et de la force f, et la tension Tc, permettant ainsi le mouvement de l'élément de régulation (20) et la régulation de la tension Tc.

10. Dispositif selon l'une quelconque des revendications 6 à 9, dans lequel, dans le mouvement du levier de frein (110) lorsqu'il est libéré de la position active et avant la position de repos, et que le câble ne soit pas soumis à la tension Tc, l'unité de poussée (43) est dans la position de libération bloquant l'encliquetage (41) et l'ensemble de blocage (40) qui est soumis à la force Tp dans une direction supérieure à la force Ts dans la direction opposée, passe dans la position d'extrémité comprimant le moyen élastique secondaire (60), l'unité de poussée (43) n'étant pas poussée par la butée (80) lorsque le levier de frein (110) atteint la position de repos, maintenant le blocage de l'encliquetage (41) et empêchant le mouvement relatif de l'élément de régulation (20), le moyen élastique secondaire (60) déplaçant l'ensemble de blocage (40) dans la position initiale lorsque le câble est à nouveau soumis à la tension Tc, poussant la butée (80) vers l'unité de poussée (43) et passant par la position poussée, libérant l'encliquetage (41) et permettant le mouvement relatif de l'élément de régulation (20), maintenant cette position initiale lorsque la force Ts est supérieure à la différence entre la somme de la force Tp et de la force f et la tension Tc.

11. Dispositif selon l'une quelconque des revendications 5 à 10, dans lequel le support d'encliquetage (45) est en forme de U avec deux parois latérales (45a), comprenant chacune au moins deux trous (45b) et un trou supplémentaire (45c) à une hauteur différente par rapport aux au moins deux trous (45b), les trous les traversant, l'encliquetage (41) comprenant un corps (42) avec un trou (42e) le traversant, et l'unité de poussée (43) comprenant au moins deux trous allongés (43b) la traversant, l'unité de support (10) ayant une forme de U sur son côté, avec deux parois latérales (11a) comprenant chacune au moins un trou allongé (12) et un trou allongé (13) qui sont à des hauteurs différentes, les trous les traversant, et une saillie (15) dans chacune des parois latérales (11a) sur le côté externe qui permet le couplage de l'unité de support (10) d'une manière pivotante au levier de frein (110), le dispositif (100) comprenant au moins deux arbres (50) traversant le au moins un trou allongé (12) de l'unité de support (10), les au moins deux trous (45b) du support d'encliquetage (45) et les aux moins deux trous allongés (43b) de l'unité de poussée (43), permettant au support d'encliquetage (45) de coulisser par rapport à l'unité de support (10) et un arbre (51) traversant le trou allongé (13) de l'unité de support (10), le trou supplémentaire (45c) du support d'encliquetage (45) et le trou (42e) du corps (42) de l'encliquetage (41), permettant à l'encliquetage (41) de pivoter par rapport audit arbre (51) et le support d'encliquetage (45) comprenant une base (45e) avec une zone guidée (45f) s'étendant le long de cette dernière longitudinalement et un orifice (45g) dans une paroi (45d), agencé entre les parois latérales (45a), l'orifice la traversant, et l'unité de support (10) comprend une base (11b) avec un orifice (14) le traversant, l'élément de régulation (20) étant monté dans l'unité de blocage (40) qui est supportée d'une manière coulissante dans la zone guidée (45f) du support d'encliquetage (45), traversant l'orifice (14) de l'unité de support (10) et l'orifice (45g) du support d'encliquetage (45), et le moyen élastique secondaire (60) étant agencé entre la base (11 b) de l'unité de support (10) et la paroi (45d) du support d'encliquetage (45).

12. Dispositif selon la revendication précédente, dans lequel l'élément de régulation (20) comprend une extrémité (22) fixée à un égaliseur (90) du frein de stationnement (200) permettant le couplage avec le câble et une extrémité (23) à laquelle il y a une butée (24), le moyen élastique principal (30) étant agencé entre la butée (24) et une butée de guidage (25) qui est supportée dans l'unité de support (10), le moyen élastique principal (30) et le moyen élastique secondaire (60) entourant de manière concentrique l'élément de régulation (20).

13. Dispositif selon la revendication 11 ou 12, dans lequel le corps (42) de l'encliquetage (41) comprend une surface (42b) faisant face à l'élément de régulation (20), avec une zone crantée (42d) et l'élément de régulation (20) comprend dans une partie de sa surface externe, une zone crantée (21) faisant face à la zone crantée (42d) de l'encliquetage (41), l'ensemble de blocage (40) comprenant le moyen élastique (46) couplé à l'encliquetage (41) qui permet de maintenir le couplage entre l'encliquetage (41) et l'élément de régulation (20), couplant la zone crantée (42d) du corps (42) de l'encliquetage (41) et la zone crantée (21) de l'élément de régulation (20), le corps (42) de l'encliquetage (41) comprenant une surface (42a) avec une zone horizontale (42c) et l'unité de poussée (43) comprenant une surface (43a) faisant face à la surface (42a) de l'encliquetage (41) avec une saillie (44), le support de ladite saillie (44) dans la zone horizontale (42c) permettant le verrouillage de l'encliquetage (41) et ainsi le blocage de l'élément de régulation (20) et le corps (42) de l'encliquetage (41) comprenant une saillie (42f) faisant saillie dans la direction du câble, ladite saillie (42f) permettant la pression manuelle pour libérer le couplage entre l'encliquetage (41) et l'élément de régulation (20).

14. Frein de stationnement **caractérisé en ce qu'**il comprend un dispositif de tension de câble automatique (100) selon l'une quelconque des revendications précédentes.

15. Frein de stationnement selon la revendication précédente, comprenant un corps (120) avec le levier de frein (110) au niveau de son extrémité, un support (130) avec des parois latérales (131) comprenant chacune un trou (132), un arbre (140) avec une extrémité fixée de manière solidaire dans le corps (120) dans un trou (132) et l'autre extrémité raccordée d'une manière rotative dans l'autre trou (132) du support (130) et une came de levier (150) fixée de manière solidaire dans l'arbre (140) comprenant deux parois latérales (151) avec un trou (152) dans chacune des parois (151) où l'unité de support (10) est couplée d'une manière pivotante, permettant le mouvement du levier de frein (110) entre la position de repos et la position active, la rotation de la came de levier (150) et provoquant à son tour le mouvement du dispositif (100) et l'étirement du câble.
